# EUROPEAN PATENT SPECIFICATION

(11) **EP 2 436 511 B1**
(45) Date of publication and mention of the grant of the patent: **22.03.2017**
(21) Application number: 11181858.9
(22) Date of filing: 19.09.2011
(51) Int. Cl.: B29C 70/32, B29C 70/38

(54) **Method and apparatus for laying up barrel-shaped composite structures**
Verfahren und Vorrichtung zum Aufeinanderlegen fassförmiger Verbundstoffstrukturen
Procédé et appareil de recouvrement de structures composites en forme de tonneau

(30) Priority: 29.09.2010 US 893050
(43) Date of publication of application: 04.04.2012
(73) Proprietor: The Boeing Company, Chicago, IL 60606-1596 (US)
(72) Inventor: Crothers, Phillip J., Hampton East, Victoria 3188 (AU)
(74) Representative: Boult Wade Tennant

(56) References cited:
- WO-A1-03/106115
- US-A1- 2005 023 414
- US-A1- 2005 039 844

## Description

### TECHNICAL FIELD

This disclosure generally relates to fabrication of composite parts, and deals more particularly with a method and apparatus for laying up barrel-shaped composite structures, such as fuselage sections for aircraft.

### BACKGROUND

Body-of-revolution composite structures such as fuselage barrel sections may be laid up on an exterior tool surface of a mandrel which represents the inner mold line (IML) of the completed structure. Automatic fiber placement (AFP) machines may be used to apply composite material in the form of fiber tape or tows to the tool surface as the mandrel is rotated. These mandrels are self-supporting and must react both forces applied by the AFP machines and start/stop decelerations, consequently, they are relatively massive, complex and costly to fabricate. Also, additional external tooling may be required to form a desired surface on the outer mold line (OML) of the structure. For example, in the case of an aircraft fuselage section, external tooling may be required to create an aerodynamic surface on the OML (outer mold line) of the structure. In addition, substantial foundations and large motors and brakes may be required to support and rotate the relatively large rotating mass of the mandrel, and large cranes may be required to move the mandrels on the factory floor. In addition to the disadvantages discussed above, layup speed and production rates may be limited due to the limits on the speed with which the mandrels may be rotated due to their large dynamic mass.

Other production equipment has been devised for laying up composite material on an inner, barrel-shaped tool surface of a mandrel corresponding to the OML of the composite structure. This equipment uses an AFP head mounted on a cantilever supported gantry to apply composite material to the inner tool surface (inner mold line) as the mandrel is rotated. Thus, this equipment also relies on rotation of a relatively massive mandrel in order to apply composite material in the circumferential direction of the tool surface, and consequently exhibits many of the disadvantages of the production technique in which composite material is applied to the exterior tool surface of a rotating mandrel.

In US 2005/0023414, a device for automated composite lay up of a part to be manufactured - such as a large aircraft fuselage - includes a mandrel having a vertical axis and an interior mandrel surface that conforms to an outside mold line of the part. A vertical movement shaft is disposed inside the mandrel. A platform is supported, moved up and down, and rotated on the vertical movement shaft. One or more arm mechanisms are attached to the platform. One or more material delivery heads are supported by the arm mechanisms, and the arm mechanisms moves and positions the material delivery heads relative to the interior mandrel surface so that composite material is delivered directly to the outside mold line on the interior mandrel surface.

In US 2005/0039844, an aircraft part manufacturing device for automated composite lay up includes a mandrel tool having an interior mandrel surface that conforms to an outside mold line (OML) of a part: to be manufactured. One or more circular rings surround the mandrel and are attached to the mandrel. The circular rings rotate supported by bearings in a bearing cradle so that the mandrel rotates concentrically with the circular rings about an axis of rotation passing through the center of the circular rings. A composite material delivery head delivers material directly to the outside mold line on the interior mandrel surface while the mandrel is rotated. A cantilever supported gantry beam supports the material delivery head inside the interior mandrel surface. A connecting mechanism connects the material delivery head to the gantry beam and provides motion of the material delivery head relative to the interior mandrel surface.

Accordingly, there is a need for a method and apparatus for forming barrel-shaped composite structures which may not rely on rotation of relatively massive mandrels. There is also a need for a method and apparatus which reduces tooling costs while increasing laydown rates of composite materials and boosting production efficiency.

### SUMMARY

The disclosed embodiments provide a method and apparatus of laying up a barrel-shaped, composite structure by applying composite material to a stationary OML mold tool using an AFP (automatic fiber placement) head. Forming the composite layup on the OML mold tool may reduce the need for additional tooling to modify the OML surface of the finished structure. Stationary mounting of the OML mold tool eliminates the need for mechanisms required to rotate the tool. The use of a continuously rotating manipulator to move the AFP head over the tool surface allows continuous layup of composite material, thereby increasing layup rate and production efficiency. Production efficiency is further increased by the use of a PKM (parallel kinematic machine) type manipulator which provides high dynamic motion of the AFP head over the__________
tool surface. The use of a stationary OML mold tool is better suited to react high G-forces produced by the PKM manipulator. The high G-forces created by the PKM manipulator may serve to provide additional adhesion pressure to the composite materials as the speed of layup increases. Stationary mounting of the OML mold tool may reduce the mass of the tool since it is not required to be self-supporting or react inertial loads produced by emergency stop decelerations of the tool during rotation.

According to one disclosed embodiment, a method is provided of fabricating a body-of-revolution composite structure. The method comprises providing an OML mold having an interior tool surface on which a composite layup may be formed, and moving a manipulator through the interior of the mold. The method further comprises using an end-effector on the manipulator to apply composite material to the tool surface, including moving the end-effector circumferentially over the tool surface. The method further comprises holding the OML mold stationary while the layup is being formed. Moving the manipulator through the mold includes displacing the manipulator substantially linearly along the longitudinal axis of the OML mold. Moving the manipulator substantially linearly is performed by mounting the manipulator on a support, and using the support to guide the linear movement of the manipulator.

According to another embodiment, a method is provided of fabricating barrel-shaped composite structure. The method comprises providing barrel-shaped mold having interior surface defining the outer mold line of the structure, and holding the mold substantially stationary. The method further includes forming a composite layup on the interior surface of the mold while the mold is held substantially stationary. Forming the layup includes using an automated applicator head to apply composite material to the interior surface of the mold, and using a manipulator to move the applicator head through the interior of the mold and apply composite material to the interior surface.

According to a further embodiment, a method is provided of fabricating barrel-shaped fuselage sections for aircraft. The method comprises providing a mold having a barrel shaped interior mold surface on which a composite layup may be formed, and moving a manipulator substantially linearly through the interior of the mold. The method further comprises using an applicator head on the manipulator to apply composite material to the mold surface, including moving the applicator head circumferentially over the mold surface while the mold remains stationary.

According to still another embodiment, a method is provided of laying up composite material on a mandrel. The method comprises providing an OML mold, positioning a layup head for movement axially along and rotationally about an axis within the OML mold, and laying up composite material onto the OML mandrel. The method further comprises coupling the layup head end effector with a wrist, and coupling the wrist to at least one arm. The method may further comprise coupling the at least one arm about the axis such that the arm can move rotationally and/or axially and or change its orientation relative to the axis.

According to another embodiment, apparatus is provided for fabricating a barrel-shaped composite structure. The apparatus comprises a mold having a barrel-shaped interior tool surface defining the outer mold line of the structure, and a composite material applicator head for applying composite material to the tool surface. The apparatus further comprises a manipulator for manipulating the applicator head, including means for moving the head circumferentially over the mold surface, and means for mounting the manipulator for movement though the interior of the mold.

According to still another embodiment, apparatus is provided for fabricating an aircraft fuselage. The apparatus comprises a stationary mold having a generally open interior and a curved interior mold surface on which a curved composite fuselage layup may be formed. The apparatus further comprises means for holding the mold in a stationary position and a composite material applicator head for applying composite material to the curved interior mold surface. The apparatus also includes a manipulator for moving the applicator head over the interior mold surface, and means for guiding the manipulator through the open interior of the mold.

### BRIEF DESCRIPTION OF THE ILLUSTRATIONS

FIG. 1 is an illustration of a functional block diagram of apparatus for laying up a barrel-shaped composite structure according to the disclosed embodiments.
FIG. 2 is an illustration of a perspective view of a barrel-shaped fuselage section for an aircraft.
FIG. 3 is an illustration of a simplified flow diagram of a method of laying up a barrel-shaped composite structure.
FIG. 4 is an illustration of a perspective view of the apparatus shown in FIG. 1.
FIG. 5 is an illustration of a block diagram of the manipulator, wrist and head laying down composite material on an inner tool surface of the mandrel shown in FIG. 4.
FIG. 6 is an illustration of a side view of a manipulator shown in relation to the mandrel which is schematically indicated in broken lines, the AFP head not shown for clarity.
FIG. 7 is an illustration of isometric view of the manipulator shown in FIG. 6, taken on a larger scale.
FIG. 8 is an illustration of a longitudinal sectional view, taken along the line 8-8 in FIG. 4.
FIG. 9 is an illustration of a longitudinal sectional view showing an alternate mounting arrangement of the manipulator.
FIG. 10 is an illustration of a block diagram of control elements forming part of the apparatus shown in FIGS. 1 and 4-9.
FIG. 11 is a flow diagram of aircraft production and service methodology.
FIG. 12 is a block diagram of an aircraft.

### DETAILED DESCRIPTION

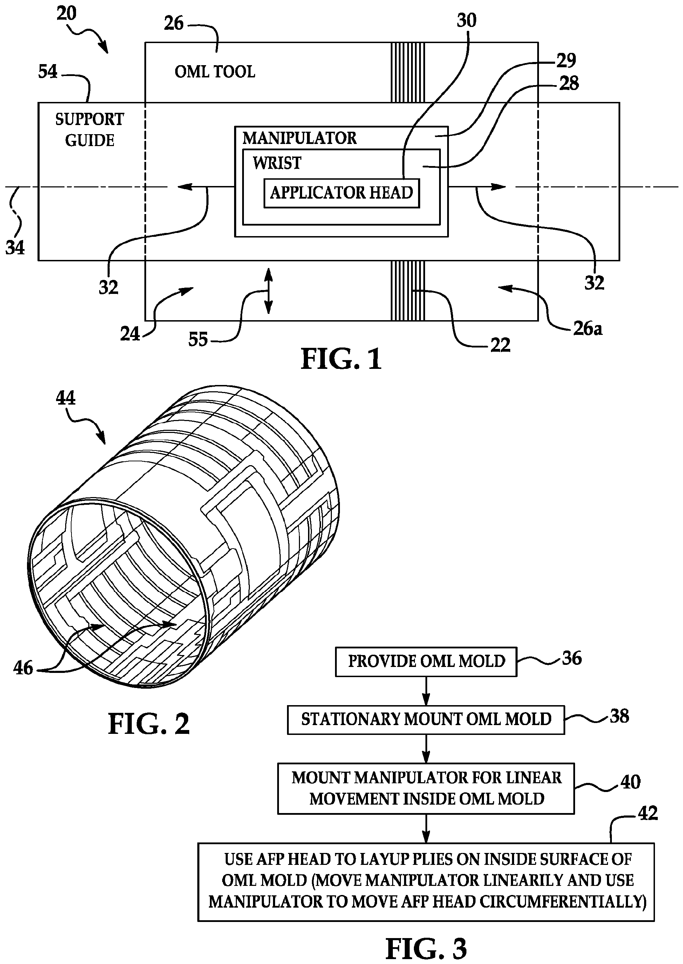

Referring first to FIG. 1, the disclosed embodiments relate to apparatus 20 for laying up a body-of- revolution composite structure on an OML mold tool 26, also sometimes referred to herein as an OML mold 26. As used herein, "body-of-revolution" refers to a structure obtained by rotating a plane or complex curve (not shown) around an axis (not shown) that lies on the same plane. In the illustrated embodiment, the body-of-revolution is disclosed as being a barrel-shaped structure, such as the barrel-shaped section 44 shown in FIG. 2, however other bodies-of-revolution are contemplated such as, for example and without limitation, a truncated cone (not shown).

The barrel-shaped composite section 44 shown in FIG. 2 may form part of an aircraft fuselage (not shown), comprising multiple laminated plies (not shown) that are laid up on the OML tool 26. The barrel-section 44 may include individual ply sections 46 which form ply doublers or reinforcements. For simplicity and ease of the description, the terms "barrel", "barrel-shaped" and "barrel section" will be used hereinafter to describe the shape of all composite bodies-of-revolution that may be fabricated by the disclosed method and apparatus, and are not intended to be limited in meaning to shapes that are cylindrical or barrel-like.

The apparatus 20 shown in FIG. 1 further comprises a manipulator 30, sometimes referred to as a robot or machine tool, mounted for bi-directional movement 32 along the longitudinal axis 34 of the OML mold 26, within the open interior 24 of the OML mold 26, by means of a guide support 54. An end effector in the form of an AFP head 28 is mounted on a wrist 29 carried by the manipulator 30. The wrist 29 is capable of moving the AFP head 28 along or about multiple axes (not shown). The AFP head 28 may comprise an automated fiber placement mechanism of the type well known in the art which applies composite material 22 in the form of pre-preg tape, fibers or fiber tows on an interior tool surface 26a of the OML mold 26. In the present example, the tool surface 26a is substantially cylindrical, resulting in a layup being formed that is substantially barrel-shaped. As will be discussed later in more detail, the manipulator 30 is rotatable completely or continuously around the longitudinal axis 34 of the OML mold 26, permitting the AFP head 28 to apply composite material 22 circumferentially, as shown by arrow 55, or at a required angle, over the tool surface 26a, as the OML mold 26 remains stationary.

Attention is now directed to FIG. 3 which broadly illustrates the overall steps of a method of laying up a barrel-shaped composite structure 44. Beginning at 36, an OML mold 26 is provided having a tool surface 26a (FIG. 1) corresponding to a desired surface-of-revolution which, in the illustrated embodiment, comprises a cylindrical or barrel shape. At 38, the OML mold 26 is stationarily mounted on a suitable support or foundation (not shown) such as a factory floor. At 40, the manipulator 30 is mounted for linear movement inside the OML mold 26. At 42, the AFP head 28 is used to layup plies (not shown) on the inside tool surface 26a of the OML mold 26. This layup process comprises moving the manipulator 30 linearly along or parallel to the longitudinal axis 34 of the mold 26, and using the manipulator 30 to move the AFP head 28 circumferentially, shown by the arrow 55 in FIG. 1, over the tool surface 26a so as to layup composite material on tool surface 26a substantially around the entire circumference of the OML mold 26. These linear and circumferential movements may be coordinated so the manipulator 30 is moved at the desired angle over the tool surface 26a.

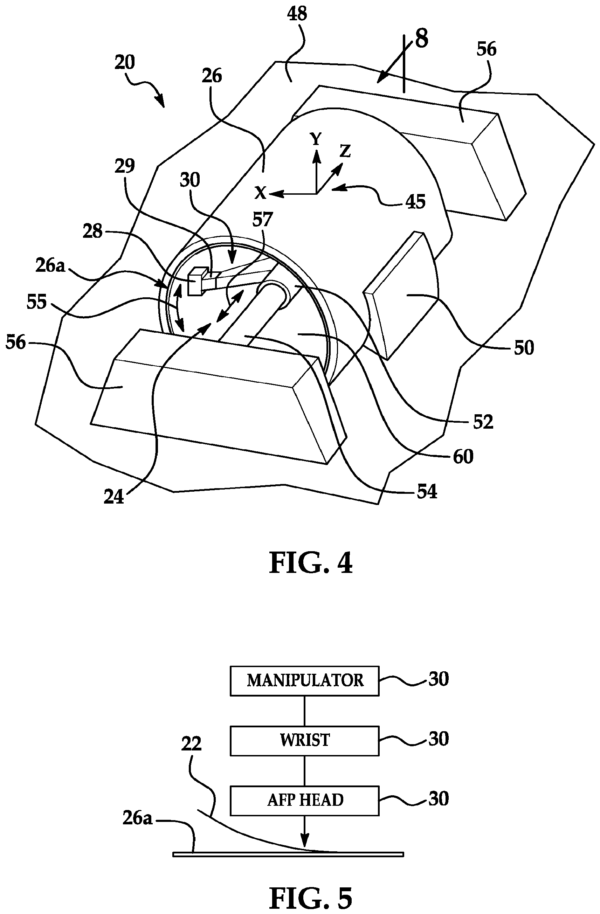

FIG. 4 illustrates additional details of the apparatus 20 shown in FIG. 1. The guide support 54 may comprise a cylindrical tube having its opposite ends stationarily secured to pillars 56 supported on a factory floor 48 or other foundation. In other embodiments, the guide support 54 may comprise multiple support elements (not shown) and/or may have other cross sectional shapes. The OML mold 26 is stationarily mounted on the factory floor 48 by means of a cradle 50 that rests on the foundation 48 and is secured to the OML mold 26. Other techniques for stationarily mounting the OML mold 26 are possible.

The manipulator 30 is mounted on the guide support 54 by means of a tubular base 52 which is sleeved over the guide support 54. The tubular base 52 mounts the manipulator 30 on the guide support 54 for both linear motion along the Z axis of the coordinate system shown by the numeral 45 corresponding to the longitudinal axis 34 (FIG. 1) of the OML mold 26, and for rotation about the Z axis. As shown in FIG. 4, the wrist 29 is mounted on the manipulator 30, and the AFP head 28 is mounted on the wrist 29 which may have freedom of movement in multiple directions ("degrees of freedom"), depending upon the requirements of the particular application. As will be discussed below in more detail, the manipulator 30 moves the AFP head 28 linearly along the Z axis through the interior 24 of the OML mold 26 in the direction of arrow 57 as well as circumferentially 55 over the tool surface 26a. These combined movements allow the applicator head 28 to traverse substantially the entire tool surface 26a.

FIG. 5 illustrates the head 28 and the wrist 29. The head 28 may comprise any of several well-known fiber placement mechanisms which may laydown groups of tows or slit tape 22 on the tool surface 26a. For example, the applicator head 28 may be similar to or have features of the applicators disclosed in the following, the entire contents of which are incorporated herein by reference: US Patent No. 4,699,683, issued October 13, 1987; US Patent Publication No. 20070029030A1 published February 8, 2007; US Patent Publication No. 20100230043 published September 16, 2010; US Patent Publication No. 20100224716 published September 9, 2010; and US Patent Publication No. 20090211698 published August 27, 2009.

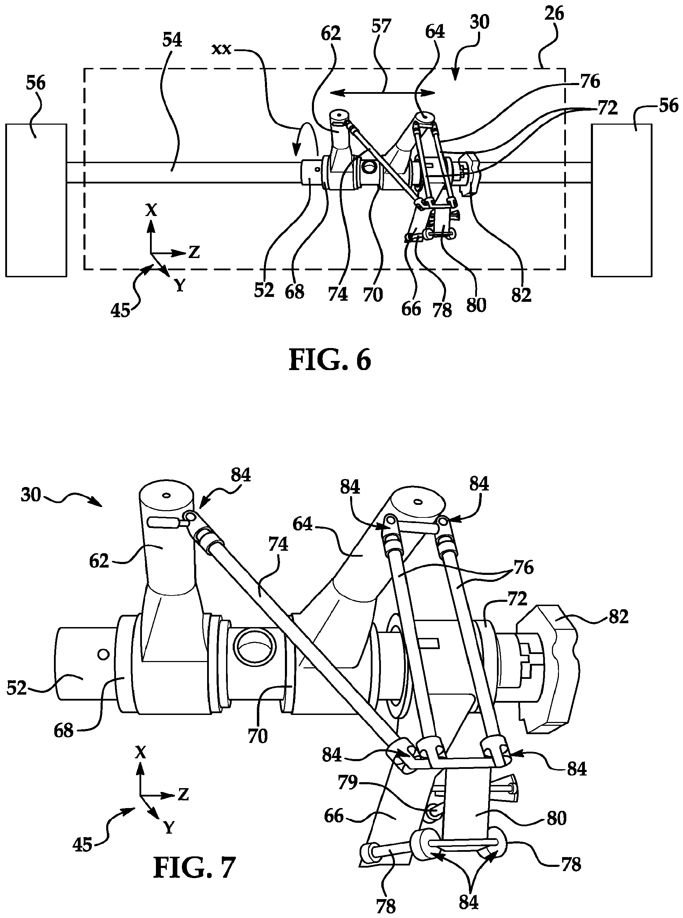

Attention is now directed to FIG. 6 and 7 which illustrate additional details of the manipulator 30. The particular manipulator 30 shown in FIGS. 6 and 7 is a parallel kinematic machine (PKM) of the type referred to as a SCARA (selective compliant assembly manipulator arm) Tau. A PKM mechanism maybe defined as a closed-looped mechanism in which the end effector (not shown) is connected to a base (not shown) by at least two independent kinematics chains. SCARA type PKM manipulators are well known for moving and rotating objects without changing the inclination of the objects. SCARA type manipulators comprise kinematic links coupled in series and normally have four degrees of freedom in the x, y, z directions and rotation of the object about an axis parallel to the Z axis. The SCARA Tau PKM format allows for extremely high dynamic motions which create fast layup motions and greater layup productivity. This manipulator format is capable of high dynamics because of its relatively low moving mass and the close proximity of the center of inertia (not shown) to the axis of motion, which in this application, corresponds to the longitudinal axis 34 (FIG. 1) of the OML mold 26.

The manipulator 30 broadly comprises three arms 62, 64, 66 respectively mounted in series on the tubular base 52 by corresponding rotating bearings 68, 70, 72. A working platform 80 to which the wrist 29 and head 28 may be mounted (not shown in FIGS. 6 and 7) is pivotally connected with each of the arms 62, 64, 66 by a series of links 74, 76, 78 79. More specifically, a single link 74 has its opposite ends pivotally coupled to the end of arm 62 and platform 80 respectively by pivotal connections 84. Each of two parallel links 76 has its opposite ends pivotally connected respectively to the end of arm 64 and platform 80 by pivotal connections 84. Finally, first and second parallel links 78 and a third parallel link 79 have their opposite ends respectively connected to the end of the third arm 66 and the working platform 80 by pivotal connections 84. A number of other arm and link combinations are possible.

Additional details and an explanation of the operation of suitable SCARA Tau type manipulators 30 may be found in the following publications, which are incorporated by reference herein in their entireties: International publication number WO 03/106115 A1, published 24 December 2003; International publication number WO 02/22320 A1 published 21 March 2002; US Patent 6, 540, 471 issued 1 April 2003; International publication number WO 2004/056538 A1 published 8 July 2004; International publication number WO 03/066289 A1 published 14 August 2003; International publication number WO 02/058895 A1 published 1 August 2002 and; US Patent 6,412,363 issued 2 July 2002.

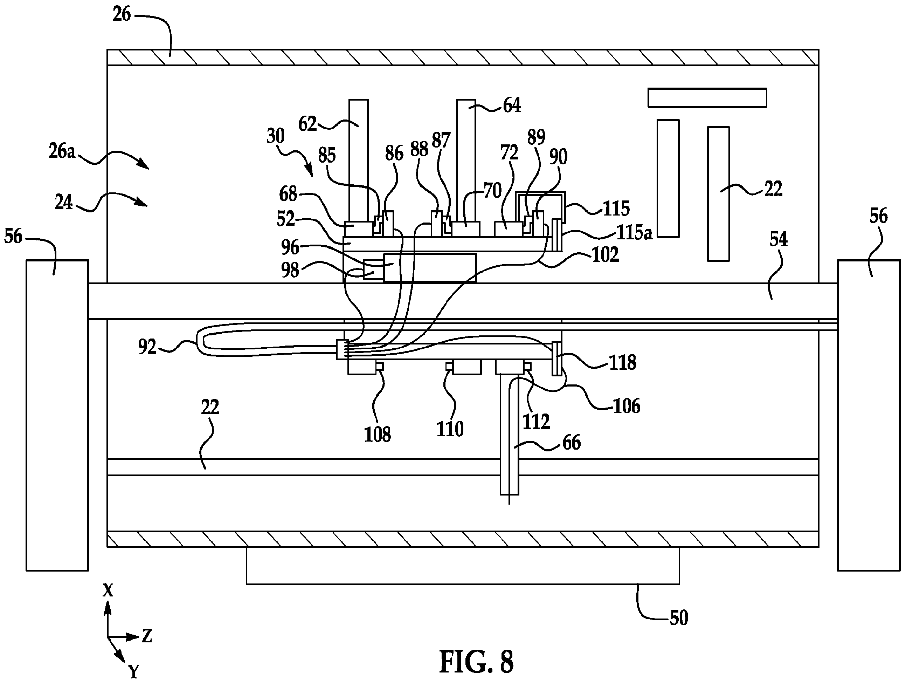

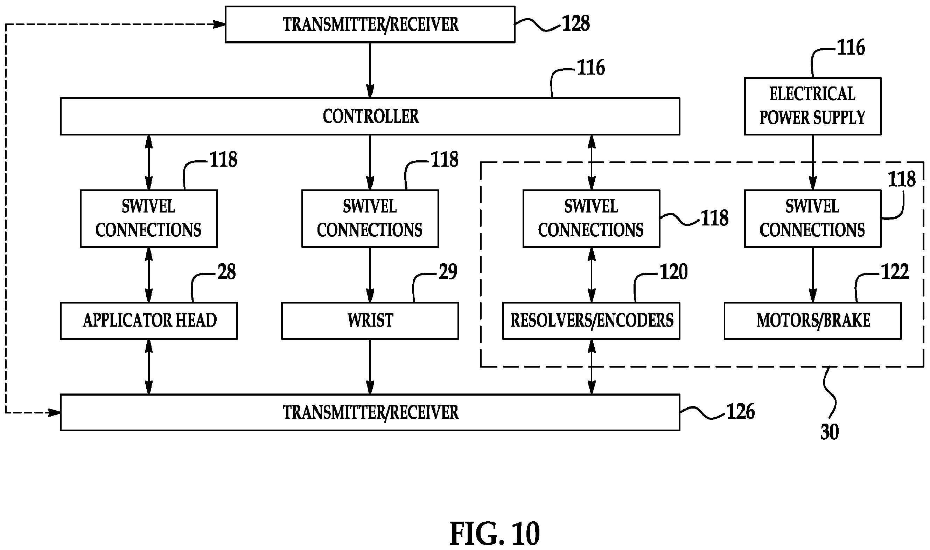

Referring now to FIG. 8, each of the arms 62, 64, 66 is mounted on the tubular base by corresponding rotating bearings 68, 70, and 72. Electrical motors 86, 88, 90, drive corresponding pinions 85, 87, 89 which turn ring gears 108, 110, and 112 that rotate the arms 62, 64, 66 around the tubular base 52. The tubular base 52 is mounted for linear movement along the guide support 54 by means of a carriage 96 driven by an electrical motor 98 positioned inside the tubular cylinder base 52. Electrical cables 102, 106 are carried on a cable chain 92 which couples electronic components such as motors 86, 88, 90 and the AFP head 28 (FIG. 4) with a later discussed, off-board controller 116 (FIG. 10). One or more swivels 118 route wires 102, 106 from the cable chain 92 to manipulator 30 and swivel to prevent twisting, tangling and/or binding of the wires 102, 106 as the manipulator 30 moves along the guide support 54. A swivel output lock 115 locks a rotating output section 115a of the swivel 118 so that the wires 102, 106 do not become tangled or extended

The disclosed SCARA Tau format manipulator 30 has an arrangement of the arms 62, 64, 66 and links 74, 76, 78, 79 in a 3-2-1 configuration, which requires that the wrist 29 have six degrees of freedom. A 3-2-1 configuration refers to the number of links 74, 76, 78 that are attached to each of the arms 62, 64, 66. Alternate formats may be used to lower the non-central mass and reduce the moment time of inertia of the manipulator 30. For example, each arm 62, 64, 66 could be taped on a separate motor (not shown) to give tilt and rotation of the working platform 80. Also, two or three of the arms 62, 64, 66 could be telescopic using ball screws (not shown), for example. This would also provide tilt and rotation of the working platform 80 and may have other advantages.

In use, the high G-forces generated by the rotating manipulator 30 are reacted by the stationary OML mold 26. Thus, the manipulator 30 may achieve higher speeds and G-forces with a lighter mechanism, or carry more weight (for example creel material). The increasing G-forces may also serve to further provide adhesion pressure for the composite materials as the speed of layup increases.

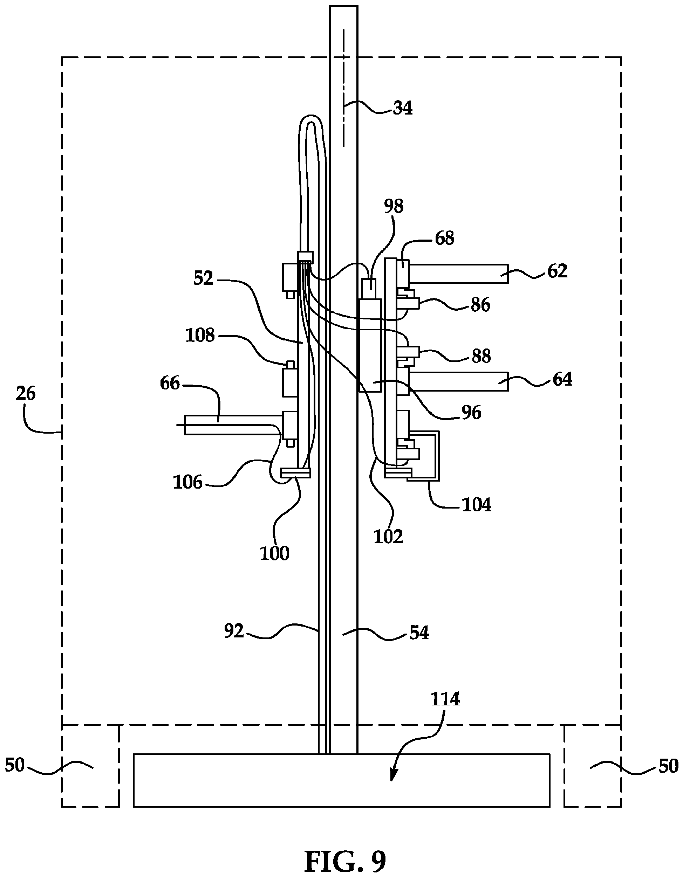

While horizontal mounting of the manipulator is illustrated in FIGS. 4, 6, 7 and 8, it may be possible to mount the manipulator 30 for vertical operation as shown in FIG. 9. In this embodiment, the guide support 54 is disposed substantially vertically and is supported on a base 114. The OML mold 26 is stationarily mounted on supports 50 with the manipulator 30 positioned for linear movement along the support guide support 54, substantially coaxial with the longitudinal axis 34 of the OML mold 26.

Attention is now directed to FIG. 10 which illustrates additional components and control elements of the apparatus 20. The applicator head 28, wrist 29 and manipulator 30 may be electrically connected with an off-board controller 116, which may comprise, without limitation, a PC (personal computer), a PLC (programmable logic controller) or other suitable type of controller. In other embodiments. The controller 116 may be mounted on the manipulator 30. The swivel connections 118 may be similar to the swivel connections 118 shown in FIG. 8 which maintain electrical contact between electrical components on the applicator head 28, wrist 29 and manipulator 30, and the controller 116, regardless of the position of and/or movement of the manipulator 30 relative to the guide support 54. In those embodiments where the controller 116 is mounted on the manipulator 30, rather than being off-board, only a single swivel connection 118 may be required to supply electrical power from the power supply 124 to the motor/brake 122.

The manipulator 30 may include resolvers and/or encoders 120 which function to determine the position of one or more elements of the manipulator 30, such as the position of the arms 62, 64, 66 (FIG. 8) which is fed back to the controller 116 via additional swivel connections 118. Similarly, the motors 86, 88, 90 and 98 as well as corresponding brakes 122 may be coupled with a suitable electrical power source 124 by means of additional swivel connections 118. In some applications, as an alternative to the use of swivel connections 118, it may be possible to transmit the process control and feedback signals wirelessly between a receiver/transmitter 126 mounted on the manipulator 30, and a ground-based receiver/transmitter 128 that is coupled with the controller 116.

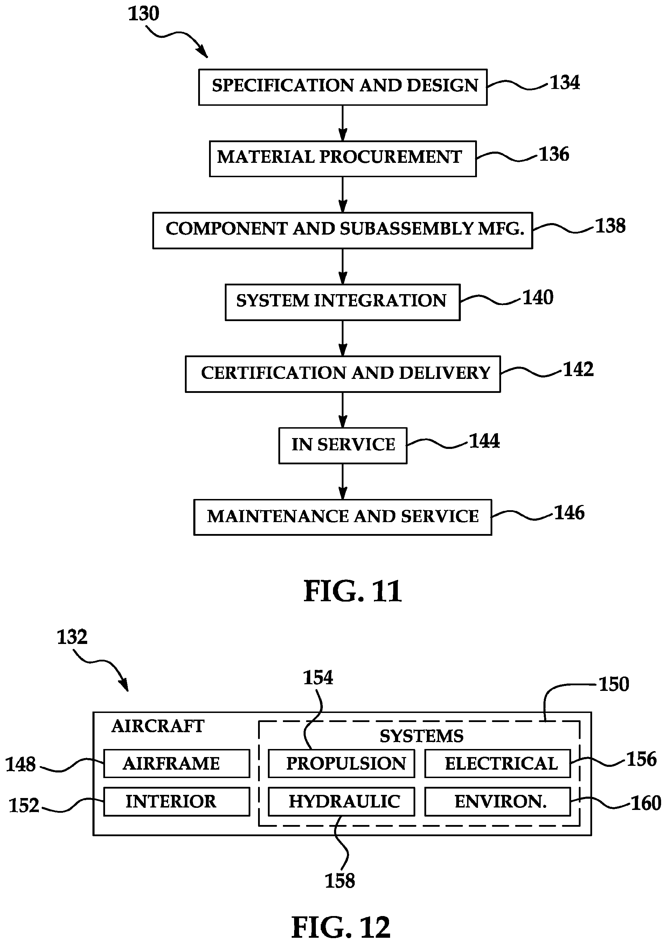

Referring next to FIGS. 11 and 12, embodiments of the disclosure may be used in the context of an aircraft manufacturing and service method 130 as shown in FIG. 11 and an aircraft 132 as shown in FIG. 12. During pre-production, exemplary method 130 may include specification and design 134 of the aircraft 132 and material procurement 136. During production, component and subassembly manufacturing 138 and system integration 140 of the aircraft 132 takes place. During step 138, the disclosed method and apparatus may be employed to fabricate composite parts such as fuselage sections which are then assembled at step 140. Thereafter, the aircraft 132 may go through certification and delivery 142 in order to be placed in service 144. While in service by a customer, the aircraft 132 may be scheduled for routine maintenance and service 146 (which may also include modification, reconfiguration, refurbishment, and so on).

Each of the processes of method 130 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 12, the aircraft 132 produced by exemplary method 130 may include an airframe 148 with a plurality of systems 150 and an interior 152. The disclosed method and apparatus may be employed to fabricate fuselage sections which form part of the airframe 148. Examples of high-level systems 150 include one or more of a propulsion system 154, an electrical system 156, a hydraulic system 158, and an environmental system 160. Any number of other systems may be included. Although an aerospace example is shown, the principles of the invention may be applied to other industries, such as the automotive industry.

The apparatus embodied herein may be employed during any one or more of the stages of the production and service method 130. For example, components or subassemblies corresponding to production process 138 may be fabricated or manufactured in a manner similar to components or subassemblies produced while the aircraft 132 is in service. Also, one or more apparatus embodiments may be utilized during the production stages 138 and 140, for example, by substantially expediting assembly of or reducing the cost of an aircraft 132. Similarly, one or more apparatus embodiments may be utilized while the aircraft 132 is in service, for example and without limitation, to maintenance and service 146.

Although the embodiments of this disclosure have been described with respect to certain exemplary embodiments, it is to be understood that the specific embodiments are for purposes of illustration and not limitation, as other variations will occur to those of skill in the art.

## Claims

1. A method of fabricating barrel-shaped composite structure (44), comprising:
providing (36) an OML mold (26) having an interior tool surface (26a) on which a composite layup may be formed;
holding (38) the OML mold stationary while the layup is being formed;
moving a manipulator (30) through the interior (24) of the mold;
using an end-effector (28) on the manipulator to apply composite material (22) to the tool surface, including moving the end-effector circumferentially (55) over the tool surface;
**characterised in that** the manipulator includes a parallel kinematic machine.

2. The method of claim 1 wherein moving the manipulator through the mold includes displacing the manipulator substantially linearly along the longitudinal axis (34) of the OML mold.

3. The method of claim 2 wherein moving the manipulator substantially linearly is performed by:
mounting the manipulator on a support (54); and
using the support to guide the linear movement of the manipulator.

4. Apparatus for fabricating a barrel-shaped composite structure (44), comprising:
a mold (26) having a barrel-shaped interior tool surface defining the outer mold line of the structure;
means adapted for stationarily mounting the mold on a supporting surface (48);
a composite material applicator head (28) for applying composite material (22) to the tool surface;
a manipulator (30) for manipulating the applicator head, including means for moving the head circumferentially (55) over the mold surface; and
means for mounting the manipulator for movement though the interior (24) of the mold;
**characterised in that** the manipulator includes a parallel kinematic machine.

5. The apparatus of claim 4, wherein the parallel kinematic machine includes:
first, second and third arms (62,64,66) rotating about a common axis; and
links (74,76,78,79) pivotally coupled between the arms and the applicator head.

6. The apparatus of claim 4, wherein the mounting means includes:
an elongate support (54) adapted to be supported on its opposite ends and substantially aligned with the longitudinal axis of the mold; and
a carriage (96) mounted for movement along the support;
wherein the manipulator is mounted on the carriage.

## Patentansprüche

1. Verfahren zur Herstellung einer tonnenförmigen Verbundstruktur (44), wobei das Verfahren umfasst:
Bereitstellen (36) einer OML-Form (26), die eine innere Werkzeugoberfläche (26a) aufweist, auf der ein Verbundmateriallaminat ausgebildet werden kann;
Halten (38) der OML-Form stationär, während das Laminat gebildet wird;
Bewegen eines Manipulators (30) durch das Innere (24) der Form;
Verwenden eines Endeffektors (28) an dem Manipulator, um das Verbundmaterial (22) auf die Werkzeugoberfläche aufzubringen, wobei das Verwenden umfasst, den Endeffektor umlaufend (55) über die Werkzeugoberfläche zu führen;
**dadurch gekennzeichnet, dass** der Manipulator eine parallelkinematische Maschine umfasst.

2. Verfahren nach Anspruch 1, wobei ein Bewegen des Manipulators durch die Form ein Verschieben des Manipulators im Wesentlichen linear entlang der Längsachse (34) der OML-Form umfasst.

3. Verfahren nach Anspruch 2, wobei ein im Wesentlichen lineares Bewegen des Manipulators durchgeführt wird, indem:
der Manipulator an einem Träger (54) montiert wird; und
der Träger verwendet wird, um die lineare Bewegung des Manipulators zu führen.

4. Vorrichtung zur Herstellung einer tonnenförmigen Verbundstruktur (44), wobei die Vorrichtung aufweist:
eine Form (26), die eine tonnenförmige innere Werkzeugoberfläche aufweist, die die äußere Formlinie der Struktur festlegt;
eine Einrichtung, die zum stationären Montieren der Form an einer Trägerfläche (48) ausgebildet ist;
einen Verbundmaterialapplikatorkopf (28) zum Aufbringen von Verbundmaterial (22) auf die Werkzeugoberfläche;
einen Manipulator (30) zum Handhaben des Applikatorkopfes, der eine Einrichtung zum Bewegen des Kopfes umlaufend (55) über die Formoberfläche bewegt; und
eine Einrichtung zum Montieren des Manipulators für eine Bewegung durch das Innere (24) der Form;
**dadurch gekennzeichnet, dass** der Manipulator eine parallelkinematische Maschine umfasst.

5. Vorrichtung nach Anspruch 4, wobei die parallelkinematische Maschine aufweist:
einen ersten, zweiten und dritten Arm (62, 64, 66), die um eine gemeinsame Achse drehen; und
Verbinder (74, 76, 78, 79), die schwenkbar zwischen den Armen und dem Applikatorkopf angebracht sind.

6. Vorrichtung nach Anspruch 4, wobei die Montiereinrichtung aufweist:
einen länglichen Träger (54), der dazu ausgebildet ist, an seinen einander gegenüberliegenden Enden gestützt zu werden, und mit der Längsachse der Form im Wesentlichen ausgerichtet ist; und
einen Schlitten (96), der für eine Bewegung entlang des Trägers montiert ist;
wobei der Manipulator an dem Schlitten montiert ist.

## Revendications

1. Procédé de fabrication d'une structure composite en forme de tonneau (44), comprenant les étapes consistant à :
fournir (36) un moule OML (26) ayant une surface d'outil intérieure (26a) sur laquelle peut être formée une couche composite ;
maintenir (38) le moule OML stationnaire pendant la formation de la couche ;
déplacer un manipulateur (30) à travers l'intérieur (24) du moule ;
utiliser un effecteur d'extrémité (28) sur le manipulateur pour appliquer un matériau composite (22) sur la surface de l'outil, incluant le déplacement de l'effecteur d'extrémité de manière circonférentielle (55) sur la surface de l'outil ;
**caractérisé en ce que** le manipulateur comprend une machine cinématique parallèle.

2. Procédé selon la revendication 1, dans lequel le déplacement du manipulateur à travers le moule inclut le déplacement du manipulateur sensiblement linéairement le long de l'axe longitudinal (34) du moule OML.

3. Procédé selon la revendication 2, dans lequel le déplacement du manipulateur essentiellement linéairement est effectué en :
montant le manipulateur sur un support (54) ; et
utilisant le support pour guider le mouvement linéaire du manipulateur.

4. Appareil pour fabriquer une structure composite (44) en forme de tonneau, comprenant :
un moule (26) ayant une surface d'outil intérieure en forme de tonneau définissant la ligne de moule extérieure de la structure ;
des moyens adaptés pour monter de manier stationnaire le moule sur une surface de support (48) ;
une tête applicatrice de matériau composite (28) pour appliquer du matériau composite (22) sur la surface de l'outil ;
un manipulateur (30) pour manipuler la tête applicatrice, comprenant des moyens pour déplacer la tête de manière circonférentielle (55) sur la surface de moule ; et
des moyens pour monter le manipulateur pour un déplacement à travers l'intérieur (24) du moule ;
**caractérisé en ce que** le manipulateur comprend une machine cinématique parallèle.

5. Appareil selon la revendication 4, dans lequel la machine cinématique parallèle comprend :
des premier, deuxième et troisième bras (62, 64, 66) tournant autour d'un axe commun ; et
des liaisons (74, 76, 78, 79) couplés de manière pivotante entre les bras et la tête applicatrice.

6. Appareil selon la revendication 4, dans lequel les moyens de montage comprennent :
un support allongé (54) adapté pour être supporté sur ses extrémités opposées et sensiblement aligné avec l'axe longitudinal du moule ; et
un chariot (96) monté pour se déplacer le long du support ;
dans lequel le manipulateur est monté sur le chariot.
